# EUROPÄISCHE PATENTANMELDUNG

(11) **EP 4 026 728 A1**
(43) Veröffentlichungstag der Anmeldung: **13.07.2022**
(21) Anmeldenummer: 22150622.3
(22) Anmeldetag: 07.01.2022
(51) Int. Cl.: B60L 53/60, B60L 53/62, B60L 58/12, H01M 10/44

(54) **AUFLADEVERFAHREN FÜR EINE BATTERIE, STEUERGERÄT UND BATTERIEMANAGEMENTSYSTEM**

(30) Priorität: 12.01.2021 DE 102021100388
(71) Anmelder: VOLKSWAGEN AG, 38440 Wolfsburg (DE)
(72) Erfinder: WESTHÄUSER, Jochen, 38102 Braunschweig (DE); ALBRECHT, Jan-Christoph, 38442 Wolfsburg (DE)
(74) Vertreter: MFG Patentanwälte Meyer-Wildhagen Meggle-Freund Gerhard PartG mbB

(57) **Zusammenfassung**

Die vorliegende Erfindung betrifft ein Aufladeverfahren für eine Batterie eines Fahrzeugs, umfassend:
Ermitteln einer prädizierten Ladedauer;
Prüfen, ob die prädizierte Ladedauer eingehalten wird;
Anpassen der prädizierten Ladedauer in Abhängigkeit des Ergebnisses der Prüfung; und Einstellen einer Ladeleistung in Abhängigkeit der angepassten Ladedauer.

## Beschreibung

Die Erfindung betrifft ein Aufladeverfahren für eine Batterie, ein Steuergerät und ein Batteriemanagementsystem.

Batterien, insbesondere Traktionsbatterien für Elektrofahrzeuge, müssen in deren Betrieb regelmäßig geladen werden. Beim Laden mit Gleichstrom werden hohe Ladeleistungen erreicht, welche zu hohen Abwärmemengen beim Laden der Batterien führen. Diese Abwärme führt zu einer Erwärmung der gesamten Batterie, der elektrischen Leiter und der Batterieumgebung. Ebenfalls ist bei aktuellen Ladesystemen der Steckkontakt zwischen der Batterie und der Ladestation nicht ausreichend dimensioniert, um hohe Ladeleistungen über eine längere Zeit bereitzustellen. Wenn die Batterie eine zu große Temperatur erreicht, wird bei manchen Elektrofahrzeugen die Ladeleistung reduziert, um die Batterie nicht zu schädigen.

Die DE 10 2019 202 014 A1 beschreibt ein Verfahren zur Berechnung der Ladedauer für das Aufladen einer Traktionsbatterie eines Elektrofahrzeugs. Das Verfahren umfasst einen Schritt zum Ermitteln mindestens eines charakteristischen Parameters der Traktionsbatterie. Das Verfahren umfasst weiterhin einen Schritt zum Unterteilen des Ladevorgangs für das Aufladen der Traktionsbatterie des Elektrofahrzeugs in mehrere Abschnitte. Das Unterteilen des Ladevorgangs erfolgt hierbei unter Verwendung des ermittelten mindestens einen charakteristischen Parameters der Traktionsbatterie. Weiterhin umfasst das Verfahren einen Schritt zum Berechnen einer individuellen Ladedauer für jeden Abschnitt des Ladevorgangs für das Aufladen der Traktionsbatterie. Schließlich umfasst das Verfahren einen Schritt zum Bestimmen der gesamten Ladedauer für das Aufladen der Traktionsbatterie. Die gesamte Ladedauer für das Aufladen der Traktionsbatterie ergibt sich hierbei beispielsweise aus der Summe der zuvor berechneten individuellen Ladedauern für jeden Abschnitt des Ladevorgangs.

Ferner offenbart die DE 10 2019 202 014 A1, dass die berechnete Ladedauer für eine Optimierung einer Routenplanung genutzt werden kann. Ist bspw. bekannt, dass an einem oder mehreren der Ladepunkte ein längerer Aufenthalt, beispielsweise für eine Mittagspause, einen Einkauf, eine Besprechung oder ähnliches erforderlich ist, so kann die Zeitdauer dieses Aufenthalts ebenfalls mit in die Planung der Route einbezogen werden.

Aufgabe der vorliegenden Erfindung ist es, ein verbessertes Aufladeverfahren, ein verbessertes Steuergerät und ein verbessertes Batteriemanagementsystem bereitzustellen.

Diese Aufgabe wird durch das Verfahren nach Anspruch 1, das Steuergerät nach Anspruch 9 und das Batteriemanagementsystem nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der vorliegenden Erfindung betrifft ein Aufladeverfahren für eine Batterie eines Fahrzeugs, umfassend:
Ermitteln einer prädizierten Ladedauer;
Prüfen, ob die prädizierte Ladedauer eingehalten wird;
Anpassen der prädizierten Ladedauer in Abhängigkeit des Ergebnisses der Prüfung; und Einstellen einer Ladeleistung in Abhängigkeit der angepassten Ladedauer.

Die Batterie ist eine wiederaufladbare Batterie oder, mit anderen Worten, ein Akkumulator. Das (Wieder-)Aufladen der Batterie, d.h. der Ladevorgang, kann bspw. an einer Ladestation oder über ein Stromnetz eines Haushalts erfolgen. Das Aufladeverfahren dient zum Durchführen des Ladevorgangs.

Das Fahrzeug kann als ein reines Elektrofahrzeug oder ein Hybridfahrzeug ausgebildet sein, für welches die Batterie als Traktionsbatterie vorgesehen sein kann.

Die prädizierte (oder auch prognostizierte bzw. vorhergesagte) Ladedauer ist die Zeitspanne, die voraussichtlich für einen Ladevorgang zur Verfügung steht. In der Regel entspricht die prädizierte Ladedauer einer Zeitspanne der Nichtbenutzung des Fahrzeugs. Aus der prädizierten Ladedauer lässt sich somit ein vorbestimmte Endzeitpunkt für den Ladevorgang (vorbestimmtes Ladevorgangende) ableiten.

Das Ermitteln der prädizierten Ladedauer kann ein Abrufen einer benutzerdefinierten Ladedauer und/oder ein Berechnen bzw. Bestimmen basierend auf einer Benutzerzieleingabe umfassen. Die benutzerdefinierte Ladedauer kann eine von dem Benutzer vorbestimmte Ladedauer sein. Die Benutzerzieleingabe kann bspw. ein Routenziel umfassen, bspw. hinsichtlich einer Dienstleistung (z. B. Arztpraxis, Krankenhaus, Friseursalon), eines Gastronomiebesuchs (z. B. Restaurants) oder einer Einkaufsmöglichkeit (z. B. Supermarkt, Einkaufszentraum). Basierend auf der Benutzerzieleingabe kann eine durchschnittliche Verweildauer an dem Routenziel ermittelt bzw. abgeleitet werden sowie eine Anreisezeit vom Fahrzeug zum Routenziel und Abreisezeit vom Routenziel zum Fahrzeug. Anhand der durchschnittlichen Verweildauer, der Anreisezeit und Abreisezeit kann die prädizierte Ladedauer ermittelt werden.

Ausgehend von der prädizierten Ladedauer wird eine Ladeleistung zum Erreichen eines Wunsch-Ladezustands ermittelt. Je kürzer die prädizierte Ladedauer ist, desto größer wird die Ladeleistung vorgesehen und je länger die prädizierte Ladedauer, desto kleiner die Ladeleistung. So kann die Ladeleistung bspw. derart ermittelt werden, dass eine von der Ladeleistung beeinflusste Abwärme beim Aufladen der Batterie einen vorbestimmten Grenzwert berücksichtigt und insbesondere nicht überschreitet.

Beim Prüfen der Einhaltung der prädizierten Ladedauer wird überprüft bzw. ermittelt, ob die prädizierte Ladedauer eingehalten, unterschritten oder überschritten wird. Mit anderen Worten, es wird überprüft, ob der Benutzer rechtzeitig das Fahrzeug zum vorbestimmten Ladevorgangende erreicht. Dabei bedeutet "Einhalten", dass der Benutzer das Fahrzeug rechtzeitig zum vorbestimmten Ladevorgangende erreicht. Ein "Unterschreiten" bedeutet, dass der Benutzer das Fahrzeug vor dem vorbestimmten Ladevorgangende und somit zu früh erreicht. Ein "Überschreiten" bedeutet, dass der Benutzer das Fahrzeug nach dem vorbestimmten Ladevorgangende und somit zu spät erreicht.

Das Prüfen kann derart erfolgen, dass ermittelt wird, ob eine aktuelle Tätigkeiten des Benutzers einen Rückschluss darauf lässt, ob die prädizierte Ladezeit eingehalten werden kann. Mit anderen Worten, die Prüfung kann anhand einer Benutzerinformation erfolgen, wobei die Benutzerinformation indikativ für die aktuelle Tätigkeit des Benutzers ist. In einem anderen Beispiel kann das Prüfen auch ohne die Benutzerinformation erfolgen. Dazu wird geprüft, wann nach Beginn des Ladevorgangs ein Signal erfasst bzw. abgerufen werden kann, das indikativ für das Wiedereintreffen des Benutzers ist. Das Signal kann bspw. ein Motorstartsignal, Fahrzeugtürentriegelungssignal oder dergleichen sein. Mit dem Signal kann das tatsächliche Wiedereintreffen des Benutzers ermittelt werden.

Die prädizierte Ladedauer wird entsprechend dem Ergebnis der Prüfung angepasst. Wenn die Prüfung ergibt, dass die prädizierte Ladezeit überschritten wird, wird die prädizierte Ladedauer verlängert. Wenn die Prüfung ergibt, dass die prädizierte Ladezeit unterschritten wird, wird die prädizierte Ladedauer verkürzt. Dabei wird die prädizierte Ladedauer derart angepasst, d.h. verlängert oder verkürzt, dass das Ladevorgangende auf einen Rückkehrzeitpunkt gelegt wird, zu dem der Benutzer voraussichtlich das Fahrzeug erreicht. Der Rückkehrzeitpunkt kann bspw. aus Positionsinformationen über den Benutzer ermittelt werden. Wenn die Prüfung ergibt, dass die prädizierte Ladezeit eingehalten wird, erfolgt keine Anpassung der prädizierten Ladezeit.

Nachdem die prädizierte Ladedauer angepasst wird, d. h. die angepasste Ladedauer ermittelt wird, wird die Ladeleistung in Abhängigkeit der angepassten Ladedauer eingestellt. Wenn die angepasste Ladedauer länger ist als die ursprünglich prädizierte Ladedauer, dann wird Ladeleistung entsprechend verringert. Wenn die angepasste Ladedauer kürzer ist als die ursprünglich prädizierte Ladedauern, dann wird die Ladeleistung entsprechend vergrößert. In beiden Fällen wird die Ladeleistung derart eingestellt, dass der Wunsch-Ladezustand mit der angepassten Ladedauer erreicht wird. Indem die Ladeleistung in Abhängigkeit der angepassten Ladedauer eingestellt bzw. aktualisiert wird, kann der Ladevorgang effizient gestaltet werden.

Ferner kann durch das Anpassen der Ladedauer verhindert werden, dass der Ladevorgang verfrüht abgeschlossen wird. Dies ist bspw. relevant, wenn das Fahrzeug an einem Stellplatz abgestellt wurde, bei dem die Stellplatzberechtigung an den Ladevorgang gekoppelt ist ("Absolutes Halteverbot außer Elektrofahrzeuge beim Laden"). Hier kann ein verfrühtes Ende des Ladevorgangs zu einem Strafzettel oder einem Abschleppen des Fahrzeugs führen. Des Weiteren gibt es Tarife, bei denen ein pauschales Entgelt für die Ladung bezahlt wird. Wenn hier ein Ladevorgang beendet ist und im Anschluss eine Konditionierung (Beheizung/Kühlung) der Batterie und eines Innenraums des Fahrzeugs notwendig wird, so wäre eine erneute Tarifbuchung notwendig bzw. die Ladesäule wäre nicht mehr verfügbar. Eine reichweitenschonende Konditionierung mit Netzanschluss wäre nicht mehr möglich, d. h. die Konditionierung ist dann nur im auf den Ladevorgang folgenden Betrieb des Fahrzeugs möglich. Die für die Konditionierung aufgewendete elektrische Energie aus der Batterie kann dann nicht mehr in Antriebsenergie und somit in Reichweite umgesetzt werden.

In manchen Ausführungsformen kann in dem erfindungsgemäßen Verfahren ferner ein Ermitteln einer Benutzerinformation über den Benutzer des Fahrzeugs umfassen. Das Prüfen, ob die prädizierte Ladedauer eingehalten wird, erfolgt dann anhand der Benutzerinformation. So kann die Benutzerinformation mindestens eine von einer Positionsinformation und einer Zahlungsinformation umfassen. Aus der Positionsinformation des Benutzers kann eine Bewegungsinformation des Benutzers (wie z. B. Bewegungsgeschwindigkeit) abgeleitet werden sowie eine Position des Benutzers relativ zum Fahrzeug. Ferner kann anhand der Positionsinformation ermittelt werden, ob sich der Benutzer an dem Routenziel befindet und/oder an welchem Ort sich der Benutzer befindet. Die Positionsinformation kann aus ein einer Positionsinformation eines mobilen Endgeräts abgeleitet werden, das der Benutzer bei sich trägt, wie z. B. Smartphones, Wearables oder dergleichen. Die Positionsinformation des mobilen Endgeräts kann wiederum über bekannte entsprechende Verfahren ermittelt werden. Die Zahlungsinformation umfassen Informationen über von dem Benutzer mit elektronischen Zahlungsmitteln getätigte Bezahlvorgänge. Elektronische Zahlungsmitteln umfassen u. a. Kreditkarten, Online-Überweisungen, elektronische Schecks, virtuelle Konten (z. B. PayPal), elektronische Lastschriftverfahren. Die mit den elektronischen Zahlungsmitteln getätigten Bezahlvorgänge können erfasst werden und bspw. in einer Datenbank als Zahlungsinformation abrufbar hinterlegt sein. Ferner kann die Benutzerinformation auch Vitalparameter über den Benutzer umfassen, wie bspw. eine Herzfrequenz, eine Atemfrequenz oder dergleichen. Die Vitalparameter können über entsprechende Endgeräte, bspw. Wearables, erfasst und in entsprechenden Datenbanken abgelegt werden.

So kann mittels der Bewegungsinformation geprüft werden, ob der Benutzer, wenn er sich in Richtung des Fahrzeugs bewegt, das Fahrzeug zum Ladevorgangende erreicht oder, mit anderen Worten, ob die prädizierte Ladedauer eingehalten werden kann. Beispielsweise kann eine voraussichtliche Ankunftszeit bzw. ein Wiedereintreffen des Benutzers beim Fahrzeug ermittelt werden, indem eine derzeitige (durchschnittliche) Bewegungsgeschwindigkeit des Benutzers und eine derzeitige Entfernung des Benutzers zum Fahrzeug berücksichtigt wird. Anhand der ermittelten Ankunftszeit bzw. des ermittelten Wiedereintreffens kann ermittelt werden, ob die prädizierte Ladedauer eingehalten werden kann. So kann bspw. ermittelt bzw. erkannt werden, dass der Benutzer das Fahrzeug nicht zum vorbestimmten Ladevorgangende erreicht und somit verspätet wiedereintrifft, wenn sich der Benutzer deutlich schneller zum Fahrzeug bewegen müsste als seine derzeitige Bewegungsgeschwindigkeit (z. B. durchschnittliche Schrittgeschwindigkeit, d.h. 4 km/h). Zusätzlich kann ermittelt werden, mit welcher Geschwindigkeit der Benutzer das Fahrzeug verlässt. Dadurch kann ermittelt werden, ob sich der Benutzer mit einem weiteren Transportmittel fortbewegt. Weitere Transportmittel können mindestens eines von einem (elektrisch angetriebenen) Roller, einem Fahrrad und ein öffentliches Verkehrsmittel umfassen. Die Information über verwendete Transportmittel kann bei der Prüfung, ob die prädizierte Ladedauer eingehalten wird, verwendet werden.

Ferner kann zum Prüfen, ob die prädizierte Ladedauer eingehalten wird, die Zahlungsinformation in Zusammenhang mit der Positionsinformation betrachtet werden. Während ein Umsatz in einem Restaurant (Zahlungsinformation) für sich genommen vergleichsweise wenig Aussagekraft hinsichtlich einer Verweildauer in einem Restaurant hat, so ist ein solcher Umsatz verbunden mit einer fehlenden Bewegung im Anschluss an den Bezahlvorgang ein Indiz, dass die Mahlzeit im Sitzen eingenommen wird und folglich die Rückkehr an das Fahrzeug verzögert wird.

In weiteren Ausführungsformen kann die Positionsinformation mindestens eine von einer Verzögerungszeitinformation und einer Verweildauer umfassen. Die Verzögerungszeitinformation gibt eine Zeitdauer an, um die sich der Benutzer aufgrund Umgebungssituation verzögert und somit die prädizierte Ladedauer überschritten wird. Die Verzögerungszeitinformation kann wegbezogen und/oder ortsbezogen sein und somit bspw. eine Stauinformation und/oder eine Verkehrsinformation umfassen. Die Verweildauer gibt eine (durchschnittliche) Zeitdauer an, die der Benutzer an einem bestimmten Ort, z. B. ein Restaurant, bleibt. Somit kann die Verweildauer ortsbezogen sein. Die Verweildauer kann von Datenbanken abgerufen werden. In manchen Beispielen kann die Verweildauer eine aktuelle Auslastung des Ortes berücksichtigen. Durch die Berücksichtigung von mindestens eine von der Verzögerungsinformation und der Verweildauer kann das Prüfen, ob die prädizierte Ladedauer eingehalten wird, besonders genau erfolgen.

So kann bspw. beim Prüfen, ob die prädizierte Ladedauer eingehalten wird basierend auf der Benutzerinformation, der betretende Ort ein Kriterium sein, ob der Benutzer pünktlich zum vorbestimmten Ladevorgangende das Fahrzeug wieder erreicht. Beispielhafte ermittelte bzw. abgerufene Verweildauern sind für das Betreten eines Supermarkts üblicherweise ca. 5 Minuten, ein Arztbesuch ca. 30 Minuten, ein Restaurantbesuch ca. 40 Minuten und eine Nutzung einer öffentlichen Toilette ca. 5 Minuten. Diese Verweildauern werden vor allem dann interessant, wenn aktuelle Auslastungsdaten (aktuelle Verweildauern) zur Verfügung stehen und so ein Abgleich zwischen der ermittelten Verweildauer in dem Restaurant und der aktuellen Verweildauer durchgeführt werden kann. Wenn der Besuch im Schnellrestaurant üblicherweise 20 Minuten dauert, aber aufgrund der hohen Auslastung die Verweildauer aktuell bei 30 Minuten liegt, kann diese Differenz beim Prüfen, ob die prädizierte Ladedauer eingehalten wird, berücksichtigt werden.

In anderen Ausführungsformen kann das Anpassen der prädizierten Ladedauer eine Freigabe des Benutzers erfordern. Mit anderen Worten, der Benutzer wird (ab-)gefragt, ob die prädizierte Ladedauer angepasst werden soll und erst nach einer Bestätigung bzw. der Freigabe der Abfrage wird die prädizierte Ladedauer angepasst. Durch die Abfrage des Benutzers wird gleichzeitig der Benutzer darüber informiert wird, dass die prädizierte Ladedauer voraussichtlich unter- oder überschritten wird. So kann der Benutzer entweder die prädizierte Ladedauer anpassen lassen oder entsprechend reagieren, um die prädizierte Ladedauer einzuhalten, wie bspw. seinen Aufenthalt an seinem derzeitigen Ort zu verkürzen oder schneller zum Fahrzeug zurückzukehren. Das Freigabeerfordernis für das Anpassen der prädizierten Ladedauer stellt sicher, dass die prädizierte Ladedauer bzw. die angepasste Ladedauer durch den Benutzer eingehalten werden kann und die Ladeleistung optimal an die prädizierte bzw. angepasste Ladedauer eingestellt werden kann.

In weiteren Ausführungsformen kann das Anpassen der prädizierten Ladedauer derart erfolgen, dass die Ladedauer bis zum Wiedereintreffen des Benutzers verzögert wird. Mit "Wiedereintreffen" ist der tatsächliche Zeitpunkt gemeint, zu dem der Benutzer wieder zum Fahrzeug zurückkehrt. Die prädizierte Ladedauer kann verzögert werden, indem die Ladeleistung abgesenkt wird. Dabei kann die Ladeleistung derart abgesenkt werden, dass der Ladevorgang jedenfalls noch stattfindet oder gerade abgeschlossen wird, wenn der Benutzer zum Fahrzeug zurückgekehrt ist. Der Ladevorgang wird also künstlich verlängert bis der Benutzer wieder das Fahrzeug erreicht. Dadurch können Kosten vermieden werden, die auftreten, wenn ein zeitabhängiger Ladetarif an einer Ladesäule günstiger ist als Kosten für eine Belegung der Ladesäule ohne Ladevorgang. Ferner kann ein Abschleppen oder ähnliches des Fahrzeugs vermieden werden, wenn eine Nutzung von Parkplätzen mit Ladesäulen nur in Verbindung mit einem Ladevorgang erlaubt ist.

In weiteren Ausführungsformen kann das Anpassen der prädizierten Ladedauer einen vorbestimmten Innenraumbetriebszustand des Fahrzeugs und/oder der Batteriebetriebszustand berücksichtigen. Insbesondere wird die prädizierte Ladedauer derart angepasst, dass das Fahrzeug in der Lage ist, vor der Abfahrt noch Energie für die Konditionierung eines Innenraums des Fahrzeugs und/oder der Batterie zu entnehmen. Wenn der Ladevorgang abgeschlossen ist, ist ein erneuter Start des Ladevorgangs ohne eine Benutzeraktion häufig nicht möglich. Die Konditionierung des Innenraums und/oder der Batterie nach einem Fahrzeugstart würde somit die Reichweite reduzieren. Mit "Konditionierung" ist gemeint, den Innenraum des Fahrzeugs und/oder die Batterie in einen vorbestimmten Betriebszustand zu bringen. Ein Betriebszustand kann bspw. eine vorbestimmte Innenraumtemperatur bzw. eine vorbestimmte Batterietemperatur sein.

In anderen Ausführungsformen kann die prädizierte Ladedauer eine benutzerdefinierte Ladedauer sein. So kann die prädizierte Ladedauer über Eingabe des Benutzers festgelegt werden. Dabei kann die Eingabe über eine entsprechende Eingabevorrichtung erfolgen.

Ein zweiter Aspekt der Erfindung betrifft ein Steuergerät, das eingerichtet ist, eines der oben beschriebenen Verfahren durchzuführen.

Ein dritter Aspekt der Erfindung Batteriemanagementsystem mit dem oben beschriebenen Steuergerät.

Ausführungsbeispiele der Erfindung werden nun beispielhaft und unter Bezugnahme auf die beigefügte Zeichnung beschrieben. Dabei zeigt:
- Fig. 1: ein Aufladeverfahren für eine Batterie;
- Fig. 2: ein weiteres Aufladeverfahren für die Batterie; und
- Fig. 3: schematisch ein Kraftfahrzeug mit einem Batteriemanagementsystem.

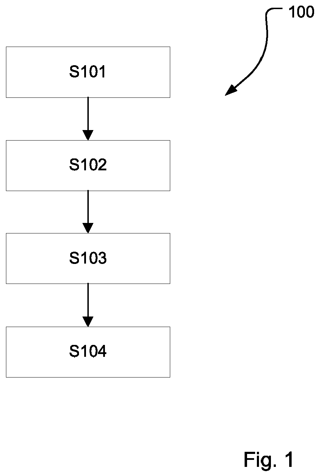

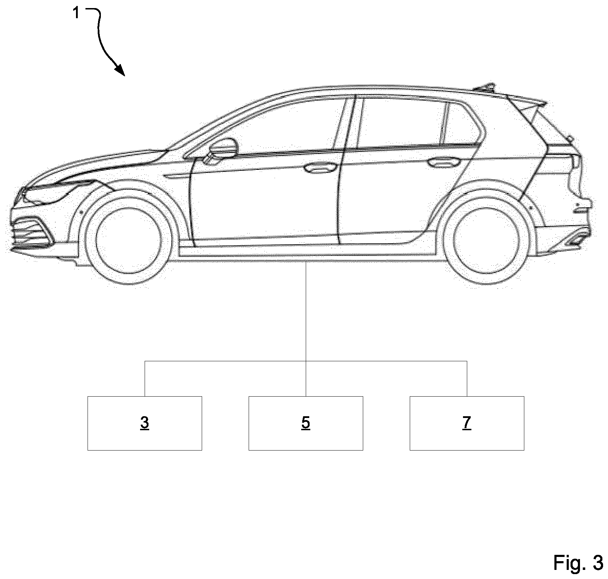

Fig. 1 zeigt ein Aufladeverfahren 100 für eine Batterie 3 eines (in Fig. 3 gezeigten) Fahrzeugs 1.

In S101 wird eine prädizierte Ladedauer für den Ladevorgang ermittelt. Dabei kann die prädizierte Ladedauer einer Eingabe eines Benutzers des Fahrzeugs 1 entsprechen.

In S102 wird geprüft, ob die prädizierte Ladedauer eingehalten wird. Dazu können verschiedene Informationen über den Benutzer (Benutzerinformation) ermittelt und herangezogen werden, die insbesondere digital erfassbar sind, wie z. B. Positionsinformation oder Zahlungsinformation. Dabei wird unter anderem geprüft, ob die prädizierte Ladedauer unterschritten, eingehalten oder überschritten wird.

In S103 wird die prädizierte Ladedauer in Abhängigkeit des Ergebnisses der Prüfung aus S102 angepasst, so dass man ggf. eine angepasste Ladedauer erhält. Ergibt die Prüfung, dass die prädizierte Ladedauer eingehalten wird, wird das Verfahren 100 beendet. Ergibt die Prüfung, dass die prädizierte Ladedauer unterschritten wird, wird die prädizierte Ladedauer derart angepasst, dass sie verkürzt wird. Ergibt die Prüfung, dass die prädizierte Ladedauer überschritten wird, wird die prädizierte Ladedauer derart angepasst, dass sie verlängert wird. Optional kann die prädizierte Ladedauer erst angepasst werden, nachdem eine Freigabe für die Anpassung durch den Benutzer erfolgt ist.

In S104 wird eine für den Ladevorgang verwendete Ladeleistung in Abhängigkeit der angepassten Ladedauer eingestellt. Optional kann zusätzlich noch ein zu erreichender vorbestimmter Betriebszustand eines Innenraums des Fahrzeugs 1 und/oder ein zu erreichender vorbestimmter Betriebszustand der Batterie 3 zum Einstellen der Ladeleistung berücksichtigt werden. Dabei wird die Ladeleistung so eingestellt, dass eine von der Ladeleistung abhängige Abwärmemenge einen vorbestimmten Grenzwert nicht überschreitet.

Das Verfahren 100 kann mehrfach hintereinander und insbesondere in regelmäßigen Zeitabständen, bspw. im Sekunden- oder Minutenbereich (z. B. von 10 Sekunden bis zu 5 Minuten), durchgeführt werden. Mit anderen Worten, das Verfahren 100 kann in einer Schleife durchgeführt werden, insbesondere bis der Benutzer wieder am Fahrzeug 1 eingetroffen ist. Dazu kann die in S103 angepasste Ladedauer für die jeweils nachfolgendende Durchführung des Verfahrens 100 als die (neue) prädizierte Ladedauer verwendet werden. Anders ausgedrückt, die prädizierte Ladedauer wird anhand der angepassten Ladedauer aktualisiert, Die mehrfache Durchführung des Verfahrens 100 ermöglicht eine verbesserte Anpassung der Ladeleistung an die Ladedauer.

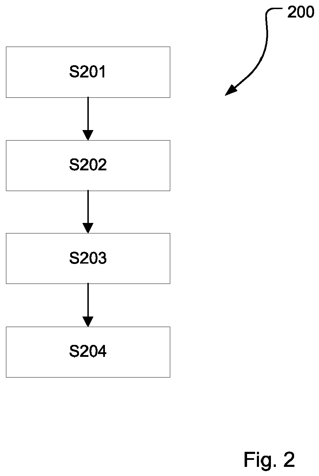

Fig. 2 zeigt ein weiteres Aufladeverfahren 200 für die Batterie 3. In dem weiteren Verfahren 200 erfolgt das Prüfen, ob die prädizierte Ladedauer eingehalten wird, ohne Verwendung der oben erwähnten Benutzerinformation.

In S201 wird die prädizierte Ladedauer für den Ladevorgang ermittelt entsprechend wie in S101.

In S202 wird geprüft, ob die prädizierte Ladedauer eingehalten oder überschritten wird. Ergibt die Prüfung, dass die prädizierte Ladedauer eingehalten wird, wird das Verfahren 200 beendet. Ergibt die Prüfung, dass die prädizierte Ladedauer überschritten wird, geht das Verfahren 200 zu S203. Hierbei kann die Prüfung ohne Zunahme von Benutzerinformationen durchgeführt werden. Beispielsweise kann geprüft werden, ob ein Signal vorliegt, das indikativ für das Wiedereintreffen des Benutzers ist. Das Signal kann bspw. ein Motorstartsignal, Fahrzeugtürentriegelungssignal oder dergleichen sein. Mit dem Signal kann das tatsächliche Wiedereintreffen des Benutzers erfasst werden. Wenn das Signal zum Zeitpunkt zum vorbestimmten Ladevorgangende nicht vorliegt, kann festgestellt werden, dass die prädizierte Ladedauer überschritten wird. In weiteren Ausführungsformen kann die Prüfung in S202 mehrfach hintereinander und insbesondere in regelmäßigen Zeitabständen, bspw. im Sekunden- oder Minutenbereich (z. B. von 10 Sekunden bis zu 5 Minuten), wiederholt werden.

In S203 wird die prädizierte Ladedauer derart angepasst, dass die Ladedauer bis zum Wiedereintreffen des Benutzers verlängert bzw. verzögert wird. Dazu wird die Ladedauer für eine unbegrenzte Dauer verlängert. Damit wird erreicht, dass der Ladevorgang jedenfalls bis zum Wiedereintreffen des Benutzers andauert.

In S204 wird (entsprechend zu S104) die für den Ladevorgang verwendete Ladeleistung in Abhängigkeit der in S203 ermittelten Ladedauer eingestellt. Im vorliegenden Fall wird daher die Ladeleistung derart abgesenkt, dass der Ladevorgang so lang wie möglich hinausgezögert bzw. verlängert wird. Die Ladeleistung wird somit so abgesenkt, dass der Ladevorgang jedenfalls noch stattfindet oder gerade abgeschlossen wird, wenn der Benutzer zum Fahrzeug 1 zurückgekehrt ist. Der Ladevorgang wird also künstlich verlängert bis der Benutzer das Fahrzeug 1 wieder erreicht. Ferner kann, wie in S104, optional der zu erreichende vorbestimmte Betriebszustand eines Innenraums des Fahrzeugs 1 und/oder der zu erreichende vorbestimmte Betriebszustand der Batterie 3 zum Einstellen der Ladeleistung berücksichtigt werden.

In Fig. 3 ist schematisch das Fahrzeug 1 dargestellt, dass als Kraftfahrzeug ausgebildet ist. Dabei kann das Kraftfahrzeug bspw. als ein reines Elektrofahrzeug oder ein Hybridfahrzeug ausgebildet sein. Das Fahrzeug umfasst die Batterie 3, die als Traktionsbatterie ausgebildet ist. Das Fahrzeug 1 umfasst ferner ein Steuergerät 5 und ein Batteriemanagementsystem 7. Das Steuergerät 5 kann als Teil des Batteriemanagementsystems 7 ausgebildet sein. Mit dem Steuergerät und dem Batteriemanagementsystem 7 können die Aufladeverfahren 100, 200 durchgeführt werden.

### Bezugszeichenliste

- 1: Fahrzeug
- 3: Batterie
- 5: Steuergerät
- 7: Batteriemanagementsystem
- 100: Aufladeverfahren
- 200: weiteres Aufladeverfahren

## Patentansprüche

1. Aufladeverfahren (100; 200) für eine Batterie (3) eines Fahrzeugs (1), umfassend:
Ermitteln einer prädizierten Ladedauer;
Prüfen, ob die prädizierte Ladedauer eingehalten wird;
Anpassen der prädizierten Ladedauer in Abhängigkeit des Ergebnisses der Prüfung; und
Einstellen einer Ladeleistung in Abhängigkeit der angepassten Ladedauer.

2. Aufladeverfahren (100; 200) nach Anspruch 1, das ferner ein Ermitteln einer Benutzerinformation über einen Benutzer des Fahrzeugs (1) umfasst und wobei das Prüfen anhand der Benutzerinformation erfolgt.

3. Aufladeverfahren (100) nach Anspruch 2, wobei die Benutzerinformation mindestens eines von einer Positionsinformation und einer Zahlungsinformation umfasst.

4. Aufladeverfahren (100) nach Anspruch 3, wobei die Positionsinformation mindestens eine von einer Verzögerungszeitinformation und einer Verweildauer umfasst.

5. Aufladeverfahren (100, 200) nach einem der vorherigen Ansprüche, wobei das Anpassen der prädizierten Ladedauer eine Freigabe des Benutzers erfordert.

6. Aufladeverfahren (200) nach einem der vorherigen Ansprüche, wobei das Anpassen der prädizierten Ladedauer derart erfolgt, dass die Ladedauer bis zum Wiedereintreffen des Benutzers verzögert wird.

7. Aufladeverfahren (100, 200) nach einem der vorherigem Ansprüche, wobei das Anpassen der prädizierten Ladedauer einen vorbestimmten Innenraumbetriebszustand des Fahrzeugs (1) und/oder der Batteriebetriebszustand berücksichtigt.

8. Aufladeverfahren (100, 200) nach einem der vorherigen Ansprüche, wobei die prädizierte Ladedauer eine benutzerdefinierte Ladedauer ist.

9. Steuergerät (5), das eingerichtet ist, ein Verfahren nach einem der Ansprüche 1 bis 8 durchzuführen.

10. Batteriemanagementsystem (7) mit einem Steuergerät (5) nach Anspruch 9.
